# FASCICULE DE BREVET EUROPEEN

(11) **EP 0 779 437 B1**
(45) Date de publication et mention de la délivrance du brevet: **09.02.2000**
(21) Numéro de dépôt: 96402500.1
(22) Date de dépôt: 21.11.1996
(51) Int. Cl.: F16B 11/00

(54) **Procédé d'assemblage de structures préfabriquées en matériau composite**
Verfahren zum Zusammenbau von Verbundwerkstoffstrukturen
Assembling procedure for composite structures

(30) Priorité: 14.12.1995 FR 9514855
(43) Date de publication de la demande: 18.06.1997
(73) Titulaire: ETAT FRANCAIS représenté par le DELEGUE GENERAL pour L'ARMEMENT, 75007 Paris (FR)
(72) Inventeur: Nadaud, Didier, 56260 Larmor Plage (FR); Le Lan, Jean Yves, 56270 Ploemeur (FR); Jaffre, Robert, 56100 Lorient (FR); Parneix, Patrick, 56260 Larmor Plage (FR); Rousseau, Loic, 56100 Lorient (FR)

(56) Documents cités:
- DE-B- 1 169 653
- FR-A- 2 557 932
- US-A- 3 960 460

## Description

L'invention concerne un procédé d'assemblage de structures préfabriquées construites en matériau composite, notamment de tronçons ou anneaux de coques de navires, ainsi que l'assemblage obtenu selon ce procédé.

Les structures en matériau composite consistent en un empilement de couches de matériaux de renfort ou tissus, tels que fibres de verre, de carbone, ou d'aramide, et de couches de résine. Elles sont obtenues par polymérisation des différentes couches ou stratification de contact.

On connait des techniques d'assemblage par soudage de tronçons ou d'anneaux préfabriqués composant une structure de navire, qui sont en acier ou en alliages d'aluminium.

Les matériaux composites ne se soudant pas, il a été conçu d'autres systèmes d'assemblage mettant en oeuvre des technologies de collage par recouvrement ou par confection de bords tombés ou encore par réalisation de joints à partir de couches de matériau composite disposées en gradins.

On connait aussi par le document FR-A-2 557 932 l'intercalement et le collage d'un insert pour assembler deux structures.

Ces technologies de collage n'ont pas permis d'atteindre des niveaux d'efforts de rupture de l'assemblage de l'ordre de ceux tenus par le matériau composite de base dont sont constituées les structures à assembler.

L'invention a donc pour but de proposer un procédé d'assemblage d'éléments préfabriqués construits en matériau composite, notamment de tronçons ou anneaux de coques de navires, qui permette à l'assemblage de tenir des niveaux d'efforts de rupture de l'ordre de ceux du matériau composite constitutif des structures à assembler.

L'invention a aussi pour but de proposer un assemblage de deux structures selon le procédé de l'invention.

L'invention a pour objet un procédé 'd'assemblage de deux structures préfabriquées construites en matériau composite présentant deux faces, l'une interne, l'autre externe, notamment de tronçons ou anneaux de coques de navires, constitué par la succession des étapes suivantes :
- dédoublement dans une zone dite d'assemblage des bords de chacune des deux structures à assembler, par séparation en deux moitiés des tissus constitutifs du matériau composite, pour dégager un espace entre ces deux moitiés,
- intercalement et centrage d'un insert entre les deux moitiés des tissus constitutifs du matériau composite de chaque bord de structure,
- collage de l'insert sur chacune de ces deux moitiés,
- boulonnage de l'insert,
- pose d'une couche de matériau composite de faible épaisseur sur chaque face de la structure, pour constituer la continuité de surface de l'ensemble des deux structures.

Dans un mode de réalisation préférentiel, l'insert est en métal ou en matériau composite.

De préférence, l'insert est calé par un matériau de remplissage pouvant être une résine, placé entre les deux moitiés de tissus constitutifs du matériau composite. L'insert peut aussi être calé par des pièces en forme de coin pouvant être en métal ou en matériau composite.

Préférentiellement, l'insert est vissé par des boulons pouvant être en métal ou en matériau composite.

L'invention a aussi pour objet un assemblage de deux structures, constitué en ce qu'il inclut un insert intercalé, centré et collé dans une zone d'assemblage, selon le procédé de l'invention.

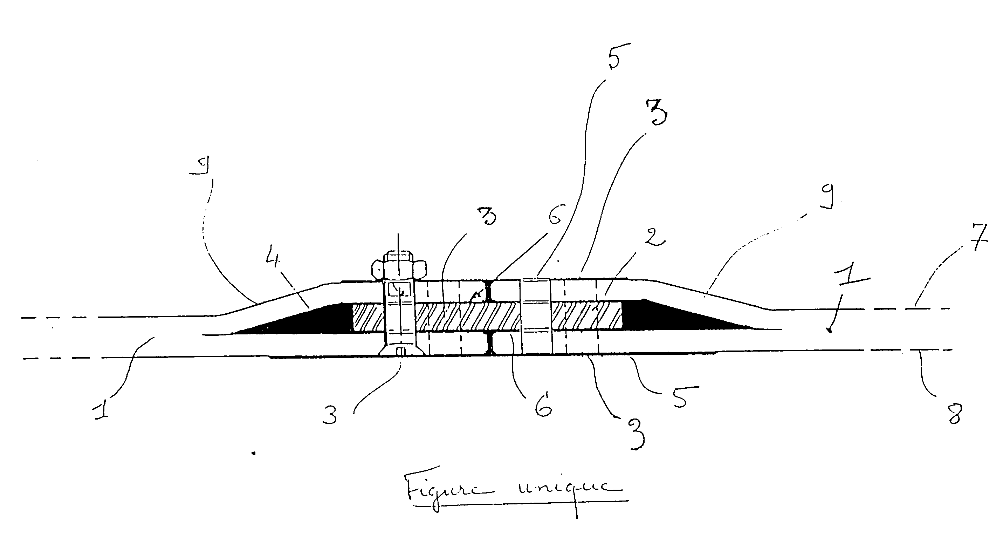

D'autres caractéristiques apparaitront à la lecture de la description suivante d'un mode de réalisation préférentiel appliqué à l'assemblage de deux tronçons de navire devant former un bordé de carène;cet exemple est donné à titre illustratif et non limitatif, à l'aide de la figure unique annexée représentant l'assemblage des deux tronçons selon l'invention.

Sur cette figure, on a représenté deux tronçons ou structures 1 entrant dans la constitution d'un bordé de carène, qui présentent une face interne 7 et une face externe 8.

Les structures 1 sont en matériau composite de haute résistance.

Le procédé selon l'invention consiste dans un premier temps à dédoubler ou séparer en deux moitiés d'épaisseur de tissus, dans une zone d'assemblage 9, les deux bords de chaque structure 1 construite en matériau composite.

Les deux moitiés d'épaisseur de tissus dégagent un espace destiné à recevoir un insert métallique 2 pouvant être en acier, acier inox ou en alliage d'aluminium résistant à la corrosion marine. L'insert 2 peut aussi être en matériau composite de haute résistance, à base de fibres de carbone, de verre ou d'aramide.

Auparavant, un matériau de remplissage 4 aura été collé dans le fond de l'espace compris entre les deux moitiés d'épaisseur de tissus de chaque bord de structure, pour caler l'insert. Le matériau de remplissage peut être une résine. Le calage de l'insert peut aussi être réalisé par deux pièces en forme de coin, chacune étant collée dans l'espace compris entre les deux moitiés d'épaisseur de tissus de chaque bord de structure.

L'insert 2 est collé de part et d'autre par un film de colle 6 sur chacune des deux moitiés d'épaisseur de tissus.

L'insert 2 aura été centré avant collage dans la zone d'assemblage 9 entre les moitiés d'épaisseur de tissus de chaque bord de structure 1.

Une couche 5 de matériau composite de faible épaisseur est ajoutée soit par collage soit par stratification dans la zone d'assemblage 9, pour constituer la continuité de surface du bordé de carène de part et d'autre des faces 7 et 8 .

L'insert 2 est ensuite maintenu par des boulons 3, dont les têtes sont vissées du côté de la face externe 8. Les boulons sont en acier, acier inox, alliage d'aluminium ou en tout autre matériau métallique ou composite offrant une bonne tenue mécanique et résistance à la corrosion marine.

Une plaque intercalaire métallique peut être placée de part et d'autre de l'insert 2.

L'assemblage selon l'invention permet de résister à des efforts de rupture supérieurs à celle du matériau de base de la zone hors assemblage, et pouvant atteindre 65 tonnes pour une bande de structure de largeur 100 mm et d'épaisseur 20 mm.

Le procédé selon l'invention est applicable à des structures entrant dans la constitution de tous types de navires, tels que des patrouilleurs ou des chasseurs de mines.

## Revendications

1. Procédé d'assemblage de deux structures préfabriquées construites en matériau composite présentant deux faces, l'une interne, l'autre externe, notamment de tronçons ou anneaux de coques de navires, constitué par la succession des étapes suivantes :
- dédoublement dans une zone dite d'assemblage (9) des bords de chacune des deux structures (1) à assembler, par séparation en deux moitiés des tissus constitutifs du matériau composite, pour dégager un espace entre ces deux moitiés,
- intercalement et centrage d'un insert (2) entre les deux moitiés des tissus constitutifs du matériau composite de chaque bord de structure (1),
- collage de l'insert (2) sur chacune de ces deux moitiés,
- boulonnage de l'insert (2,3),
- pose d'une couche de matériau composite (5) de faible épaisseur sur chaque face de la structure (1), pour constituer la continuité de surface de l'ensemble des deux structures.

2. Procédé d'assemblage selon la revendication 1, constitué en ce que l'insert (2) est en métal ou en matériau composite.

3. Procédé d'assemblage selon l'une des revendications 1 à 2, constitué en ce que l'insert (2) est calé par un matériau de remplissage placé entre les deux moitiés de tissus constitutifs du matériau composite, pour chaque bord de structure.

4. Procédé d'assemblage selon la revendication 3, constitué en ce que le matériau de remplissage est une résine.

5. Procédé d'assemblage selon l'une des revendications 1 à 2, constitué en ce que l'insert est calé par deux pièces en forme de coin, collées dans l'espace compris entre les deux moitiés d'épaisseur de tissus de chaque bord de structure (1).

6. Procédé d'assemblage selon la revendication 5, constitué en ce que les pièces en forme de coin sont en métal ou en matériau composite.

7. Procédé d'assemblage selon l'une des revendications 1 à 6, constitué en ce que les boulons (3) sont en métal ou en matériau composite.

8. Assemblage de deux structures, constitué en ce qu'il inclut un insert (2) intercalé, centré et collé dans une zone d'assemblage (9), selon le procédé de l'une des revendications 1 à 7.

## Patentansprüche

1. Verfahren zum Zusammenfügen von vorgefertigten Strukturen aus Verbundmaterial mit einer Innen- und einer Außenfläche, insbesondere von Schiffsrumpfteilen oder -ringen, welches in der Aufeinanderfolge der folgenden Etappen besteht:
- Entdoppeln in einer sogenannten Verbindungszone (9) der Kanten beider zu verbindenden Strukturen (1) durch Trennen der das Verbundmaterial bildenden Gewebe in zwei Hälften, um zwischen diesen beiden Hälften einen Hohlraum zu schaffen,
- Einschieben und Zentrieren einer Einlage (2) zwischen die beiden Hälften der das Verbundmaterial jeder Strukturkante (1) bildenden Gewebe,
- Verleimen der Einlage (2) auf jeder dieser zwei Hälften,
- Verschrauben der Einlage (2,3),
- Anbringen einer Verbundmaterialschicht (5) geringer Dicke auf jeder Fläche der Struktur (1), um den kontinuierlichen Verlauf der Oberfläche der aus den beiden Strukturen gebildeten Konstruktion zu gewährleisten.

2. Verbindungsverfahren gemäß Patentanspruch 1, darin bestehend, daß die Einlage (2) aus Metall oder aus einem Verbundmaterial besteht.

3. Verbindungsverfahren gemäß einem der Patentansprüche 1 bis 2, darin bestehend, daß die Einlage (2) von einem Füllmaterial gestützt wird, welches zwischen den beiden Hälften der das Verbundmaterial bildenden Gewebe für jede Strukturkante angebracht wird.

4. Verbindungsverfahren gemäß Patentanspruch 3, darin bestehend, daß das Füllmaterial ein Harz ist.

5. Verbindungsverfahren gemäß einem der Patentansprüche 1 bis 2, darin bestehend, daß die Einlage von zwei winkelförmigen Elementen gestützt wird, welche in dem zwischen den beiden Gewebehälften jeder Strukturkante (1) liegenden Hohlraum verleimt werden.

6. Verbindungsverfahren gemäß Patentanspruch 5, darin bestehend, daß die winkelförmigen Elemente aus Metall oder aus einem Verbundmaterial bestehen.

7. Verbindungsverfahren gemäß einem der Patentansprüche 1 bis 6, darin bestehend, daß die Bolzen (3) aus Metall oder aus einem Verbundmaterial bestehen.

8. Verbindung von zwei Strukturen, darin bestehend, daß sie eine in einer Verbindungszone (9) eingeschobene, zentrierte und verleimte Einlage gemäß dem Verfahren eines der Patentansprüche 1 bis 7 enthält.

## Claims

1. A method of assembling together two prefabricated structures made of a composite material and having respective inside and outside faces, in particular segments or rings of ship hulls, said method being constituted by the following succession of steps:
splitting the edge of each of the two structures (1) to be assembled together in two by separating the fabrics making up the composite material into two halves, so as to define a space between the two halves in an "assembly" zone (9);
interposing and centering an insert (2) between the two halves of the fabrics making up the composite material in each structure edge (1);
gluing the insert (2) to each of the two halves;
bolting the insert (2, 3); and
laying a layer of composite material (5) of low thickness on each face of the structure (1) so as to constitute continuity for the surfaces of the assembly of the two structures.

2. A method according to claim 1, constituted in that the insert (2) is made of metal or of a composite material.

3. A method according to claim 1 or 2, constituted in that the insert (2) is wedged by a packing material placed between the two halves of the fabrics making up the composite material in each structure edge.

4. A method according to claim 3, constituted in that the packing material is a resin.

5. A method according to claim 1 or 2, constituted in that the insert is wedged by two wedge-shaped pieces glued in the space lying between the two half-thicknesses of fabric in each structure edge (1).

6. A method according to claim 5, constituted in that the wedge-shaped pieces are made of metal or of a composite material.

7. A method according to any one of claims 1 to 6, constituted in that the colts (3) are made of metal or of a composite material.

8. An assembly of two structures, constituted in that it includes an interposed insert (2) centered and glued in an assembly zone (9), the assembly being obtained by implementing the method according to any one of claims 1 to 7.
